# EUROPÄISCHE PATENTSCHRIFT

(11) **EP 1 738 580 B1**
(45) Veröffentlichungstag und Bekanntmachung des Hinweises auf die Patenterteilung: **10.08.2016**
(21) Anmeldenummer: 05731050.0
(22) Anmeldetag: 23.03.2005
(51) Int. Cl.: H04N 5/225, G02B 13/00, G02B 13/04, G03B 17/18

(54) **VORRICHTUNG ZUM ÜBERWACHEN EINES RAUMBEREICHS, INSBESONDERE ZUM ABSICHERN EINES GEFAHRENBEREICHS EINER AUTOMATISIERT ARBEITENDEN ANLAGE**
DEVICE FOR MONITORING A SPATIAL AREA, ESPECIALLY FOR SECURING A HAZARDOUS AREA OF AN AUTOMATED INSTALLATION
DISPOSITIF POUR SURVEILLER UNE ZONE, NOTAMMENT POUR SECURISER UNE ZONE DANGEREUSE D'UNE INSTALLATION AUTOMATIQUE

(30) Priorität: 19.04.2004 DE 102004020998
(43) Veröffentlichungstag der Anmeldung: 03.01.2007
(73) Patentinhaber: Pilz GmbH & Co. KG, 73760 Ostfildern (DE)
(72) Erfinder: WENDLER, Martin, 70599 Stuttgart (DE)
(74) Vertreter: Witte, Weller & Partner Patentanwälte mbB
(86) Internationale Anmeldenummer: PCT/EP2005/003074
(87) Internationale Veröffentlichungsnummer: WO 2005/101812

(56) Entgegenhaltungen:
- EP-A- 0 902 402
- DE-A1- 10 017 333
- US-A- 5 617 255
- US-A1- 2003 025 826
- PATENT ABSTRACTS OF JAPAN Bd. 2000, Nr. 20, 10. Juli 2001 (2001-07-10) & JP 2001 066508 A (CANON INC), 16. März 2001 (2001-03-16)
- PATENT ABSTRACTS OF JAPAN Bd. 2000, Nr. 06, 22. September 2000 (2000-09-22) & JP 2000 089122 A (CANON INC), 31. März 2000 (2000-03-31)

## Beschreibung

Die vorliegende Erfindung betrifft eine Vorrichtung zum Überwachen eines Raumbereichs, insbesondere zum Absichern eines Gefahrenbereichs einer automatisiert arbeitenden Anlage, mit einer Bildaufnahmeeinheit zum Aufnehmen eines Abbildes des Raumbereichs und mit einer Auswerte- und Steuereinheit, die in Abhängigkeit von dem Abbild eine Sicherheitsfunktion auslöst, wobei die Bildaufnahmeeinheit eine Abbildungsoptik mit einem Objektiv und einen Bildsensor mit einer Vielzahl von Bildpunkten besitzt, wobei die Auswerte- und Steuereinheit eine Bildhelligkeitsüberwachung aufweist, die die Sicherheitsfunktion auslöst, wenn ein Bildhelligkeitswert des Abbildes einen Bildhelligkeitsschwellenwert unterschreitet, wobei die Auswerte- und Steuereinheit eine Bildkontrastüberwachung aufweist, die eine Sicherheitsfunktion auslöst, wenn ein Bildkontrastwert des Abbildes einen Bildkontrastschwellenwert unterschreitet, und wobei die Auswerte- und Steuereinheit außerdem eine Positionsüberwachung aufweist, die eine Sicherheitsfunktion auslöst, wenn sich die Position eines im Abbild detektierten Referenzobjektes verändert.

Eine solche Vorrichtung ist beispielsweise aus EP 0 902 402 A2 bekannt.

Zum Absichern von Gefahr bringenden Anlagen, wie beispielsweise automatisiert arbeitenden Robotern, Pressenstraßen, Transportbändern und anderem, werden außer mechanischen Absperrungen bereits seit langem Lichtschranken und Lichtgitter verwendet. Diese bilden einen "Lichtzaun" vor der abzusichernden Anlage. Tritt jemand durch den Lichtzaun hindurch, wird dies erkannt und an eine übergeordnete Auswerte- und Steuereinheit gemeldet. Diese löst daraufhin eine Sicherheitsfunktion aus, indem sie beispielsweise die überwachte Anlage abschaltet oder anderweitig in einen ungefährlichen Zustand bringt. Darüber hinaus kann auch eine Warnmeldung, ein Alarmsignal oder dergleichen ausgelöst werden.

Für diesen Zweck haben sich Lichtschranken in der Praxis seit langem bewährt. Sie besitzen jedoch einige Nachteile. Beispielsweise ist die Montage von Lichtschranken vergleichsweise aufwendig, da die von einander entfernt stehenden Sender und Empfänger exakt zueinander justiert werden müssen. Darüber hinaus kann mit einer Lichtschranke nur ein "gerader" Zaunverlauf realisiert werden. Um eine Anlage an mehreren Seiten oder entlang eines gekrümmten Grenzverlaufs abzusichern, sind mehrere Lichtschranken- oder Lichtgittersysteme erforderlich.

Um diesen Nachteilen zu begegnen, gibt es seit einiger Zeit Bestrebungen, Gefahrbereiche von automatisiert arbeitenden Anlagen mit Hilfe von modernen Bildaufnahme- und Bildauswertevorrichtungen abzusichern. Dabei wird mit einer Bildaufnahmeeinheit (häufig einfach als Kamera bezeichnet) ein Raumbereich optisch überwacht. Die aufgenommenen Bilder werden automatisch und in Echtzeit ausgewertet, um eine Gefahrensituation, wie beispielsweise das Eindringen einer Person in den Gefahrenbereich der Anlage, zu detektieren. Ein Beispiel für eine solche Vorrichtung ist in DE 199 38 639 A1 beschrieben. Ein weiteres Beispiel ist aus der eingangs genannten EP 0 902 402 A2 bekannt.

Da die Bildaufnahmeeinheit in einer solchen Vorrichtung eine sicherheitskritische Funktion ausübt, muss durch geeignete Maßnahmen sichergestellt sein, dass die Bildaufnahmeeinheit (wie auch alle anderen Komponenten einer solchen Vorrichtung) zu jeder Zeit einwandfrei funktioniert und die Detektion einer Gefahrensituation in Echtzeit ermöglicht. Hierzu ist es unter anderem erforderlich, die einwandfreie Funktion der Bildaufnahmeeinheit regelmäßig zu überprüfen. In der EP 0 902 402 A2 ist zu diesem Zweck vorgeschlagen, dass die Auswerteeinheit die Funktionsfähigkeit der Bildaufnahmeeinheit unter anderem durch Überwachen einer Grundhelligkeit des aktuellen Bildes und/oder anhand einer vorgegebenen Helligkeitsstreuung überprüft. Die in der Druckschrift genannten Maßnahmen sind für sich genommen jedoch nicht ausreichend, um eine Funktionssicherheit zu gewährleisten, die den Anforderungen der Kategorien 3 oder 4 der Europäischen Norm EN 954-1 oder vergleichbaren einschlägigen Sicherheitsnormen zum Absichern von technischen Anlagen entspricht. Darüber hinaus sind die in EP 0 902 402 A2 beschriebenen Maßnahmen vor allem dazu vorgegehen, den Ausfall einer externen Beleuchtung oder ein Blenden durch Fremdlicht sowie den Totalausfall der Bildaufnahmeeinheit festzustellen. Einflüsse, die die Erkennungssicherheit der Bildaufnahmeeinheit nur stellenweise beeinträchtigen, wie beispielsweise singuläre Verschmutzungen auf der Abbildungsoptik der Bildaufnahmeeinheit, lassen sich mit den beschriebenen Verfahren nicht beherrschen.

In DE 100 17 333 A1 ist ein Verfahren beschrieben, mit dem die Funktionssicherheit einer gattungsgemäßen Bildaufnahmeeinheit im laufenden Überwachungsbetrieb überprüft werden kann, indem das aufgenommene Abbild des Raumbereichs gezielt dynamisiert wird. Damit kann einerseits der verwendete Bildsensor individuell getestet werden. Andererseits lässt der Funktionstest auch eine zuverlässige Aussage über die Funktionsfähigkeit des Gesamtsystems zu. Allerdings ist das beschriebene Verfahren für sich allein genommen noch nicht optimal, vor allem in Bezug eine Beeinträchtigung der Erkennungssicherheit durch Verschmutzung der Abbildungsoptik.

Aus der schon genannten DE 199 38 639 A1 ist es für die dort beschriebenen Vorrichtung bekannt, Mittel zur Kompensation von Verschmutzungen eines definierten Ziels vorzusehen, wobei das definierte Ziel im Beobachtungsbereich der Bildaufnahmeeinheit angeordnet ist. Die Gefahr von Verschmutzungen der Abbildungsoptik ist hier nicht näher betrachtet.

Kleine Kameras, wie sie beispielsweise in PCs, Mobiltelefonen, Fahrzeugen oder auch als Überwachungskameras eingesetzt werden, besitzen zum Teil eine Abbildungsoptik, bei der eine Aperturblende sehr weit vorne im optischen Strahlengang angeordnet ist, teilweise sogar vor den Linsenelementen der Abbildungsoptik. Entsprechende Kameras sind beispielsweise aus US 2003/0025826 A1, JP 2001-066508, JP 2000-089122 oder US 5,617,255 bekannt.

Grundsätzlich besteht natürlich die Möglichkeit, dem Verschmutzen der Abbildungsoptik durch Reinigungsmaßnahmen entgegenzuwirken und/oder mit Hilfe von "Vorhängen" aus bewegter Luft oder mit Hilfe von schnell rotierenden Glasscheiben eine Verschmutzung zu verhindern. Derartige Maßnahmen sind jedoch aufwändig und müssen im Hinblick auf den sicherheitskritischen Anwendungsbereich wiederum auf ihre Funktionssicherheit überwacht werden.

Vor diesem Hintergrund ist es eine Aufgabe der vorliegenden Erfindung, eine Vorrichtung der eingangs genannten Art so auszubilden, dass eine Beeinträchtigung der Funktions- und Erkennungssicherheit durch Verschmutzungen im Bereich der Abbildungsoptik auf möglichst einfache und effiziente Weise verhindert ist.

Diese Aufgabe wird nach einem Aspekt der Erfindung durch eine Vorrichtung der eingangs genannten Art gelöst, bei der die Abbildungsoptik eine objektseitige vordere Glasfläche und eine Eintrittspupille besitzt, die auf oder zumindest im Bereich der vorderen objektseitigen Glasfläche liegt, so dass eine singuläre Verschmutzung der vorderen Glasfläche die Vielzahl der Bildpunkte weitgehend gleichmäßig abschattet, und ferner mit zumindest einem in Raumbereich angeordneten künstlichen Kontrastmuster als Referenzobjekt mit einem definierten Bildkontrastwert, den die Auswerte- und Steuereinheit überwacht, um kleineste Schmutzpartikel auf der vorderen Glasfläche zu detektieren, und mit einer bekannten Position, die die Auswerte- und Steuereinheit überwacht, um Wassertropfen und andere transparente Verschmutzungen auf der vorderen Glasfläche zu detektieren

Jede Abbildungsoptik besitzt eine sogenannte Aperturblende (häufig auch einfach nur Blende genannt), welche die Öffnung des Objektivs bestimmt. Die Aperturblende begrenzt jedes Lichtbündel, das von einem beliebige Objektpunkt ausgeht und vom Objektiv auf die Bildebene abgebildet wird. In der Aperturblende gehen die Lichtbündel von sämtlichen Objektpunkten durch denselben Ort und werden damit auch gleichermaßen begrenzt. Lichtbündel am Rand werden manchmal auch von Gehäuseteilen auf einer Seite zusätzlich begrenzt, was als Vignettierung bezeichnet wird. Damit ist die Aperturblende ein wesentliches Element, das die Eigenschaften der Abbildungsoptik mitbestimmt, und zwar insbesondere die Tiefenschärfe des aufgenommenen Abbildes.

Wie aus der Optik bekannt ist, ist die Eintrittspupille das von der Objektseite her durch die Abbildungsoptik gesehene Abbild der Aperturblende. Dieses Abbild, also die Eintrittspupille, liegt bei gattungsgemäßen Vorrichtungen deutlich hinter der vorderen objektseitigen Glasfläche, also im Inneren des verwendeten Kameraobjektivs und in aller Regel durch ein oder mehrere abbildende Linsen von der vorderen objektseitigen Glasfläche getrennt. Grund hierfür ist der typische Aufbau konventioneller Kameraobjektive, der vor allem Anforderungen in Bezug auf die Korrektur von Abbildungsfehlern und in Bezug auf einen möglichst weiten Beobachtungsbereich Rechnung trägt.

Die vorliegende Erfindung verwendet im Gegensatz dazu eine Abbildungsoptik, die sich von herkömmlichen Kameraobjektiven unterscheidet, indem die Lage der Eintrittspupille aus dem Inneren der Abbildungsoptik zur Objektseite hin verlegt ist. Eine solche Lage der Eintrittspupille mag für sich genommen aus der Optik bekannt sein. Im Rahmen der vorliegenden Erfindung besitzt eine solche Abbildungsoptik jedoch den Vorteil, dass sich eine singuläre Verschmutzung auf der vorderen objektseitigen Glasfläche nicht nur auf einen räumlich eng begrenzten Bereich des Bildsensors, sondern auf den überwiegenden Teil des Bildsensors, im Optimalfall auf den gesamten Bildsensor (alle Bildpunkte) auswirkt. Eine singuläre Verschmutzung führt daher nicht zu einem dunklen Fleck auf dem Bildsensor, wie bei den bisherigen Vorrichtungen, sondern sie dunkelt das aufgenommenen Abbild insgesamt und weitgehend gleichmäßig ab. Grund hierfür ist, dass die objektseitige vordere Glasfläche bei der erfindungsgemäßen Abbildungsoptik so zu dem Bildsensor angeordnet ist, dass Lichtstrahlen, die durch einen Flächenpunkt der vorderen objektseitigen Glasfläche treten, eine Vielzahl von getrennt zueinanderliegenden Bildpunkten des Bildsensors erreichen können. Mit anderen Worten geht das Licht zu den Bildpunkten des Bildsensors durch sämtliche Flächenpunkte auf der objektseitigen vorderen Glasfläche. Sofern eine Objekterkennung insgesamt (noch) möglich ist, was bspw. anhand des Referenzobjekts im überwachten Raumbereich leicht überwacht werden kann, kann die neue Vorrichtung den Raumbereich somit trotz singuläre Verschmutzungen lückenlos überwachen.

Die Erfindung beruht damit auf der Idee, in einer Vorrichtung der eingangs genannten Art eine Abbildungsoptik zu verwenden, die die durch einen singulären Schmutzfleck hervorgerufene Abschattung möglichst gleichmäßig auf viele Bildpunkte des Bildsensors verteilt. Es wird also kein einzelner Bereich des Bildsensors vollständig "blind", während andere Bereiche unbeeinflusst sind. Infolge dessen kann der Bildsensor in allen Raumbereichen eine Gefahrensituation erkennen, sofern er sie überhaupt noch erkennen kann. Ein unentdecktes "Loch" im ansonsten funktionierenden Überwachungsbereich ist zuverlässig verhindert.

Um diesen gewünschten Effekt einfach und effizient zu erreichen, liegt die Eintrittspupille vor der vorderen Glasfläche auf der Objektseite, exakt auf der vorderen Glasfläche oder im räumlichen Nahbereich der vorderen objektseitigen Glasfläche, jedoch knapp dahinter. Letzteres hat zwar zur Folge, dass eine singuläre Verschmutzung möglicherweise nicht mehr alle Bildpunkte des Bildsensors gleichmäßig abschattet. Jedoch wird immer noch ein großer Teil des Bildsensors beeinflusst, was für die praktische Realisierung der Erfindung ausreichend ist. Andererseits kann die vordere Glasfläche im letztgenannten Fall noch einfach gereinigt werden, was den genannten Nachteil aufwiegt.

Ferner weist die Auswerte- und Steuereinheit eine Bildhelligkeitsüberwachung auf, die eine Sicherheitsfunktion auslöst, wenn ein Bildhelligkeitswert des Abbildes einen Bildhelligkeitsschwellenwert unterschreitet.

Die Überwachung des aufgenommenen Abbildes auf eine Grundhelligkeit ist für sich genommen aus der oben erwähnten EP 0 902 402 A2 bekannt. Im Rahmen der vorliegenden Erfindung ist diese Ausgestaltung jedoch eine besonders einfache und wirkungsvolle Maßnahme, um eine zu starke Verschmutzung der Abbildungsoptik festzustellen. Wie bereits oben erwähnt, führt ein einzelner Schmutzfleck zwar nicht zum Verlust der Erkennungssicherheit, er bewirkt jedoch eine Absenkung der aufgenommenen Lichtintensität über eine Vielzahl von Bildpunkten verteilt. Je stärker und großflächiger die Verschmutzung der Bildaufnahmeeinheit ist, desto dunkler ist das vom Bildsensor aufgenommene Abbild. Durch Vergleich der Bildhelligkeit des aufgenommenen Abbildes mit einem entsprechenden Bildhelligkeitsschwellenwert kann daher eine maximal zulässige Verschmutzung auf sehr einfache Weise erkannt werden.

Für die Überwachung der Bildhelligkeit können verschiedene Verfahren eingesetzt werden. In einer bevorzugten Ausgestaltung wird die mittlere Bildhelligkeit des gesamten aufgenommenen Abbildes oder eines repräsentativen Ausschnitts davon überwacht. Hiernach wird also die mittlere Helligkeit des Abbildes mit dem Bildhelligkeitsschwellenwert verglichen.

In einer anderen bevorzugten Ausgestaltung ist die maximale Anzahl der Bildpunkte festgelegt, die einen bestimmten Helligkeitsschwellenwert unterschreiten dürfen. Übersteigt die tatsächliche Anzahl die festgelegte Maximalanzahl, ist der Bildhelligkeitswert des aktuellen Abbildes unter den entsprechend definierten Bildhelligkeitsschwellenwert gefallen.

In einer dritten bevorzugten Ausgestaltung ist die maximale Größe zusammenhängender Bildbereiche definiert, die dunkler als ein festgelegter Bildhelligkeitsschwellenwert sein dürfen. Wird die maximal zulässige Größe überschritten, bedeutet dies, dass das aktuell aufgenommene Abbild einen entsprechenden Bildhelligkeitsschwellenwert unterschreitet. In allen drei Ausgestaltungen löst die Auswerte- und Steuereinheit eine Sicherheitsfunktion aus, die beispielsweise eine überwachte Anlage in einen Ruhezustand bringt und eine Fehlermeldung "Verschmutzung zu stark" ausgibt.

Des Weiteren weist die Auswerte- und Steuereinheit eine Bildkontrastüberwachung auf, die eine Sicherheitsfunktion auslöst, wenn ein Bildkontrastwert des Abbildes einen Bildkontrastschwellenwert unterschreitet.

In diesem Fall wird der Kontrast jedes aktuellen Abbildes mit dem Kontrast eines bei sauberer Abbildungsoptik aufgenommenen Referenzbildes verglichen. Als Maß für den Kontrast wird bevorzugt die Standardabweichung der Helligkeitswerte aller Bildpunkte bezogen auf die mittlere Bildhelligkeit verwendet. Mit einer solchen Bildkontrastüberwachung lassen sich auch kleinste Schmutzpartikel, wie etwa Staub, auf dem optischen Eintrittsfenster der Bildaufnahmeeinheit detektieren. Während ein größerer, weitgehend lichtundurchlässiger Schmutzfleck die Bildhelligkeit des Abbildes aufgrund der oben beschriebenen zusammenhänge reduziert, haben kleine Staubkörnchen eher eine Verschlechterung des Bildkontrastes zur Folge. Ursache sind Lichtstreuungen an den Staubkörnchen im Unterschied zur Lichtabsorption (oder auch Reflexion) von größeren lichtundurchlässigen Schmutzflecken. Diese Ausgestaltung ist in der Lage, eine "schleichende" Verschmutzung frühzeitig zu erkennen, und sie bietet daher eine besonders hohe Funktions- und Erkennungssicherheit.

Außerdem ist im Raumbereich zumindest ein Referenzobjekt mit einem definierten Bildkontrast angeordnet, den die Auswerte- und Steuereinheit überwacht.

Ein solches Referenzobjekt ist besonders dann von Vorteil, wenn die überwachte Szene von sich aus nur geringe oder stetig schwankende Kontraste besitzt. Die Verwendung eines künstlichen Referenzobjekts vereinfacht die Überwachung und bietet zudem eine noch weiter erhöhte Erkennungssicherheit.

Schließlich weist die Auswerte- und Steuereinheit eine Positionsüberwachung auf, die eine Sicherheitsfunktion auslöst, wenn sich die Position eines im Abbild detektierten Objektes, insbesondere des genannten Referenzobjektes, verändert.

Diese Ausgestaltung ermöglicht es, eine dritte Art von Verschmutzungen auf dem optischen Eintrittsfenster der Bildaufnahmeeinheit zuverlässig festzustellen, nämlich transparente Verschmutzungen, wie insbesondere Wassertropfen. Derartige Verschmutzungen wirken wie ein kleines Prisma, d.h. sie verändern die Blickrichtung, ohne die Bildhelligkeit und/oder den Kontrast zwangsläufig zu verändern. Indem man die Position eines Referenzobjektes bei der Inbetriebnahme der neuen Vorrichtung einlernt und nachfolgend überwacht, können auch derartige Verschmutzungen zuverlässig und frühzeitig erkannt werden. Damit wird auch sichergestellt, dass sich ein detektiertes Objekt, beispielsweise eine Person, wirklich an der Stelle befindet, an der sie aufgrund des aufgenommenen Abbildes vermutet wird.

Die erfindungsgemäße Abbildungsoptik lässt sich kostengünstig realisieren und sie gewährleistet eine gleichbleibend hohe und lückenlose Erkennungssicherheit auch bei singulären Verschmutzungen der Abbildungsoptik. Aufwändige Schutzmaßnahmen vor Verschmutzung oder Reinigungsmaßnahmen können daher vermieden werden oder es lässt sich zumindest der Aufwand für derartige Maßnahmen reduzieren. Die neue Vorrichtung kann daher bei hoher Erkennungssicherheit insgesamt einfacher und kostengünstiger realisiert werden.

Damit ist die oben genannte Aufgabe vollständig gelöst.

In einer Ausgestaltung der Erfindung liegt die Eintrittspupille in einem Abstand von der objektseitigen vorderen Glasfläche entfernt, der kleiner als ein Öffnungsradius der Eintrittspupille ist.

Aus konstruktiven oder anderen Gründen kann es wünschenswert sein, die Eintrittspupille im Nahbereich der vorderen Glasfläche und vor allem hinter der vorderen Glasfläche anzuordnen. Mit zunehmender Verlagerung der Eintrittspupille in das Innere der Abbildungsoptik geht der oben beschriebene, globale Abschattungseffekt jedoch verloren. Die Bildpunkte des Bildsensors werden bei einer singulären Verschmutzung nicht mehr gleichmäßig abgeschattet. Die hier angegebene maximale Entfernung der Eintrittspupille von der vorderen objektseitigen Glasfläche hat sich als einfache Dimensionierungsregel herausgestellt, bei der der erfindungsgemäße Effekt noch auswertbar gut auftritt Gleichwohl handelt es sich um eine "Daumenregel", d.h. der Grenzwert ist nicht als scharfe Grenze zu verstehen.

In einer weiteren Ausgestaltung besitzt die Abbildungsoptik eine Aperturblende, die im Bereich der objektseitigen vorderen Glasfläche liegt. Besonders bevorzugt fällt die Aperturblende mit der Eintrittspupille zusammen. Letzteres ist insbesondere dadurch realisiert, dass ein vorderer Glaskörper, der die vordere objektseitige Glasfläche ausbildet, aus "Fensterglas" ist, d.h. er besitzt keine nennenswerten Abbildungseigenschaften im Rahmen der Abbildungsoptik.

In dieser Ausgestaltung ist die Abbildungsoptik stark asymmetrisch. Der oben beschriebene globale Abschattungseffekt lässt sich damit besonders gut erreichen. Darüber hinaus ermöglicht diese Ausgestaltung eine kurze Bauform der Abbildungsoptik.

In einer weiteren Ausgestaltung der Erfindung besitzt die Abbildungsoptik eine Fassung für die objektseitige vordere Glasfläche, die plan mit der objektseitigen vorderen Glasfläche abschließt.

Diese Ausgestaltung ermöglicht eine besonders einfache Reinigung der vorderen Glasfläche und vermeidet das Festsetzen von Verschmutzungen in Sicken, Ecken oder dergleichen.

In einer weiteren Ausgestaltung beinhaltet der Bildsensor ein zweidimensionales Array von Bildpunkten, welches dazu ausgebildet ist, das Abbild vollständig aufzunehmen.

Im Gegensatz dazu gibt es gattungsgemäße Vorrichtungen auch mit zeilenförmigen (eindimensionalen) Bildsensoren. Die bevorzugte Ausgestaltung besitzt demgegenüber den Vorteil, dass sich die Abschattung infolge eines Schmutzflecks auf der Abbildungsoptik noch besser und großflächiger verteilen kann. Die Erkennungssicherheit ist daher noch zuverlässiger gewährleistet.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen, die durch die Ansprüche definiert ist.

Ausführungsbeispiele der Erfindung sind in der Zeichnung dargestellt und werden in der nachfolgenden Beschreibung näher erläutert. Es zeigen:
- Fig. 1: eine vereinfachte Darstellung der erfindungsgemäßen Vorrichtung,
- Fig. 2: die Bildaufnahmeeinheit der Vorrichtung aus Fig. 1 in einer vereinfachten Blockschaltbilddarstellung,
- Fig. 3: eine schematische Darstellung eines konventionellen Weitwinkelobjektivs, wie es in bisherigen Bildaufnahmeeinheiten verwendet wurde, und
- Fig. 4: eine schematische Darstellung eines Objektivs für die Vorrichtung aus Fig. 1 und 2.

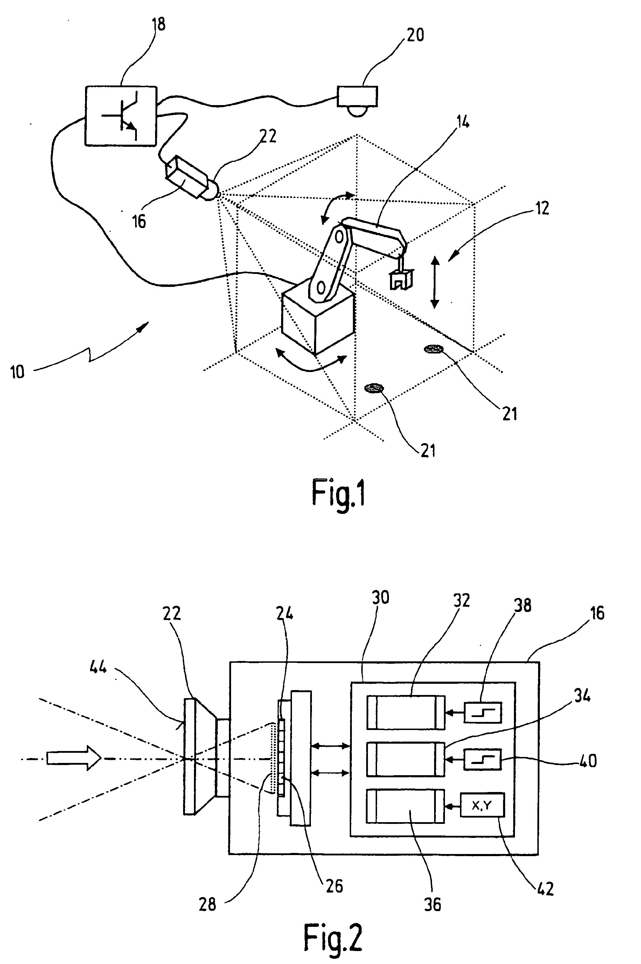

In Fig. 1 ist ein Ausführungsbeispiel der neuen Vorrichtung in seiner Gesamtheit mit der Bezugsziffer 10 bezeichnet. Die Vorrichtung 10 dient hier zum Absichern eines Gefahrenbereichs 12, der sich aufgrund der automatisierten Bewegungen (angedeutet durch die Pfeile) eines Roboters 14 ergibt. Sobald eine Person (hier nicht gezeigt) den Gefahrenbereich 12 betritt, muss der Roboter 14 in eine ungefährliche Ruhelage gebracht werden. Dies geschieht mit Hilfe der neuen Vorrichtung 10.

Die Vorrichtung 10 beinhaltet eine Bildaufnahmeeinheit 16 und eine Auswerte- und Steuereinheit 18. Mit der Bezugsziffer 20 ist eine Lichtquelle bezeichnet, die von der Auswerte- und Steuereinheit 18 angesteuert wird, um den Roboter 14 bzw. dessen Gefahrenbereich 12 zu beleuchten. Die Lichtquelle 20 kann auch entfallen, wenn die Grundhelligkeit im Bereich des Roboters 14 ausreichend ist, um eine Bildauswertung mit der erforderlichen Erkennungssicherheit durchzuführen.

Mit der Bezugsziffer 21 sind zwei im Gefahrenbereich 12 angeordnete Kontrastmuster als Referenzobjekte für die nachfolgend beschriebene Bildauswertung bezeichnet. Die Referenzobjekte 21 könnten auch außerhalb des Gefahrenbereichs 12 angeordnet sein, sofern sie im Blickwinkel der Bildaufnahmeeinheit 16 liegen. Die Referenzobjekte 21 besitzen einen definierten Bildkontrast, anhand dessen sich in der nachfolgend beschriebenen Weise Verschmutzungen auf dem optischen Eintrittsfenster der Bildaufnahmeeinheit 16 detektieren lassen.

Die Bildaufnahmeeinheit 16 wird von der Auswerte- und Steuereinheit 18 angesteuert, was unter anderem Funktionstests zum beinhaltet. Beispielsweise überprüft die Auswerte- und Steuereinheit 18 die Funktionsfähigkeit der Bildaufnahmeeinheit 16 anhand des in DE 100 17 333 A1 beschriebenen Verfahrens. Es kann jedoch auch jedes andere Verfahren zum Sicherstellen der Funktionssicherheit verwendet werden, wobei die Vorrichtung 10 insgesamt vorzugsweise so ausgebildet ist, dass sie die Bedingungen der Kategorie 4 der Europäischen Norm EN 954-1 oder vergleichbare Sicherheitsanforderungen erfüllt.

Sobald die Auswerte- und Steuereinheit 18 aus den erhaltenen Bilddaten erkennt, dass eine Person in den Gefahrenbereich 12 eingedrungen ist, schaltet sie den Roboter 14 in die sichere Ruhelage. Sie ist dementsprechend mit einer hier nicht dargestellten Betriebssteuerung des Roboters 14 verbunden oder auch in diese integriert.

Wenngleich die Absicherung von automatisiert arbeitenden Anlagen das bevorzugte Anwendungsgebiet für die Vorrichtung 10 ist, sei der Vollständigkeit halber erwähnt, dass die Erfindung auch auf andere Einsatzgebiete übertragen werden kann, bei denen eine Bildaufnahmeeinheit 16 einen Raumbereich aufnimmt und/oder überwacht.

Gemäß Fig. 2 besitzt die Bildaufnahmeeinheit 16 ein Objektiv 22 und einen Bildsensor 24 mit einer Vielzahl von Bildpunkten 26. Bevorzugt ist der Bildsensor 24 ein zweidimensionaler, digitaler Bildsensor in CMOS-Technologie oder CCD-Technologie. Die Bildpunkte 26 werden bei solchen Bildsensoren häufig als Pixel bezeichnet. Die genannten Bildsensoren wandeln einfallendes Licht in elektrische Signale um und beinhalten in aller Regel einen hier nicht dargestellten A/D-Wandler, so dass die Bilddaten in digitaler Form zur Auswertung zur Verfügung stehen.

Grundsätzlich kann die vorliegende Erfindung jedoch auch bei anderen Bildsensoren und letztlich sogar bei Kameras verwendet werden, die mit konventionellen Filmen arbeiten.

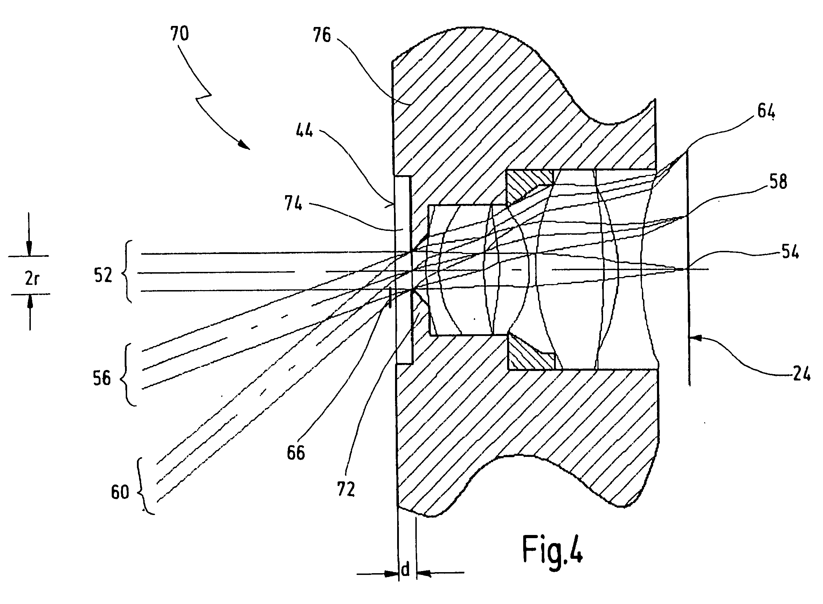

Das Objektiv 22 beinhaltet eine Abbildungsoptik, durch die ein Abbild 28 des Gefahrenbereichs 12 auf den Bildsensor 24 projiziert wird. Ein bevorzugter Aufbau der Abbildungsoptik ist nachfolgend anhand Fig. 4 beschrieben.

Mit der Bezugsziffer 30 ist ein Mikrocontroller oder Mikroprozessor samt zugehöriger Peripherie bezeichnet. Der Prozessor 30 übernimmt allgemeine Steuerungsfunktionen und kann darüber hinaus auch die Funktionalität der Auswerte- und Steuereinheit 18 enthalten. Umgekehrt könnte der Prozessor 30 mit der nachfolgend beschriebenen Funktionalität auch in der getrennt von der Bildaufnahmeeinheit 16 ausgeführten Auswerte- und Steuereinheit 18 integriert sein.

In dem bevorzugten Ausführungsbeispiel beinhaltet der Prozessor 30 drei Überwachungsmodule 32, 34, 36, die als Software und/oder Hardware (beispielsweise als FPGA) realisiert sind. Das Überwachungsmodul 32 führt eine Bildhelligkeitsüberwachung durch, d.h. es überwacht, ob ein Bildhelligkeitswert des aktuellen Abbildes 28 einen vorgegebenen Bildhelligkeitsschwellenwert unterschreitet. Der Bildhelligkeitsschwellenwert ist in Fig. 2 bei der Bezugsziffer 38 angedeutet und als Parameter in einem geeigneten Speicher der Vorrichtung 10 abgelegt. Wie bereits erwähnt, kann die Überwachung der Bildhelligkeit anhand der mittleren Helligkeit des Abbildes 28 und/oder anhand anderer Kriterien erfolgen, beispielsweise der maximalen Anzahl an Bildpunkten, die dunkler als ein bestimmter Schwellenwert sein dürfen und/oder der maximalen Größe zusammenhängender Bildbereiche, die dunkler als ein Schwellenwert sein dürfen.

Das Überwachungsmodul 34 überwacht den Bildkontrast im Abbild 28. Ein als Vergleichskriterium herangezogener Bildkontrastschwellenwert ist bei der Bezugsziffer 40 angedeutet und ebenfalls in einem geeigneten Speicher der Vorrichtung 10 hinterlegt. Bevorzugt erfolgt die Kontrastüberwachung anhand der beiden Referenzobjekte 21, die im Abbild 28 einen definierten Bildkontrast hervorrufen.

Das Überwachungsmodul 36 überwacht die (bekannte) Position der Referenzobjekte 21 im aktuellen Abbild 28. Die bekannte Position ist bei der Bezugsziffer 42 angedeutet und ebenfalls in einem geeigneten Speicher der Vorrichtung 10 hinterlegt. Mit Hilfe der Positionsüberwachung können Wassertropfen und andere transparente Verschmutzungen auf einer vorderen objektseitigen Glasfläche 44 der Bildaufnahmeeinheit 16 detektiert werden.

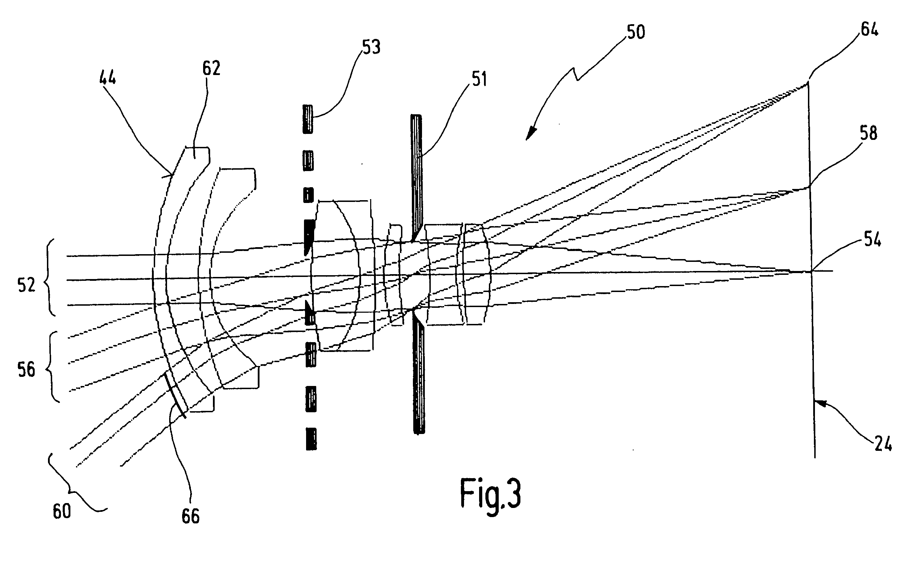

Fig. 3 zeigt die Linsenanordnung eines typischen Weitwinkelobjektivs 50 mit einer Aperturblende 51 sowie den Verlauf einiger typischer Lichtbündel auf dem Weg zum Bildsensor 24. Die Eintrittspupille liegt bei diesem Objektiv etwa mittig zwischen der vorderen Glasfläche 44 und der Aperturblende 51 und ist bei der Bezugsziffer 53 angedeutet.

Ein erstes Lichtbündel 52 trifft gerade von vorn und parallel zur optischen Achse 54 auf die vordere, objektseitige Glasfläche 44 des Objektivs 50. Die einzelnen Strahlen des Lichtbündels 52 nehmen innerhalb des Objektivs 50 zwar einen etwas unterschiedlichen Verlauf, sie treffen jedoch weitgehend punktgleich auf ein oder wenige Pixel des Bildsensors 24. Alle Strahlen des Lichtbündels 52 treffen den Bildsensor 24 in der Verlängerung der optischen Achse 54.

Ein zweites beispielhaft dargestelltes Lichtbündel 56 tritt etwas schräg von unten in das Weitwinkelobjektiv 50 ein. Die einzelnen Strahlen des Lichtbündels 56 durchlaufen wiederum unterschiedliche Wege, sie erreichen den Bildsensor 24 jedoch weitgehend deckungsgleich, nämlich im Punkt 58. Gleiches gilt für das dritte beispielhaft dargestellte Lichtbündel 60, das schräg von unten auf den äußeren Rand der ersten Objektivlinse 62 trifft. Die einzelnen Strahlen des Lichtbündels 60 erreichen den Bildsensor 24 im Punkt 64.

Befindet sich nun ein Schmutzfleck 66 auf der vorderen Glasfläche 44 in dem Bereich, in dem das Lichtbündel 60 auf die Glasfläche 44 trifft, wird der Bildpunkt 64 abgeschattet. Die Bildpunkte in den Bereichen 54, 58 bleiben hiervon jedoch weitgehend unbeeinflusst. Als Folge davon ist der Bildsensor 24 im Bereich des Bildpunktes 64 "blind", was dazu führen kann, dass eine Person oder ein Objekt unerkannt in den Gefahrenbereich 12 eindringen kann. Die Erkennungssicherheit ist bei dem Objektiv 50 also ortsabhängig durch die Verschmutzung 66 beeinträchtigt.

Fig. 4 zeigt ein Ausführungsbeispiel eines bevorzugten Objektivs 70 für die Vorrichtung 10. Das Objektiv 70 zeichnet sich dadurch aus, dass seine Eintrittspupille 72 im Bereich der vorderen objektseitigen Glasfläche 44 liegt. Dabei fällt die Eintrittspupille hier mit der realen Aperturblende des Objektivs 70 zusammen, was dadurch erreicht wird, dass die Aperturblende 72 dicht hinter einem vorderen Glaskörper 74 liegt, der keine nennenswerten Abbildungseigenschaften in Bezug auf die durchtretenden Lichtstrahlen besitzt. Grundsätzlich könnte die Aperturblende jedoch auch weiter im Inneren des Objektivs 70 liegen, wenn der Glaskörper 74 oder weitere hier nicht gezeigte Glaskörper als geeignete Linsen ausgebildet sind, um die Eintrittspupille in den Bereich der vorderen Glasfläche 44 zu projizieren.

Die Eintrittspupille 72 besitzt einen Öffnungsdurchmesser 2r und sie liegt hier in einer Entfernung d < r von der vorderen Glasfläche 44 entfernt in das Innere des Objektivs 70 versetzt. Dies ermöglicht es, eine plane Außenfläche des Glaskörpers 74 zu realisieren, die in einer Ebene mit der planen Außenfläche einer Fassung 76 liegt.

Die gezeigte Lage der Eintrittspupille hat zur Folge, dass sich die Lichtbündel 52, 56, 60 nicht erst "tief" im Inneren des Objektivs 70, sondern bereits im Bereich der vorderen objektseitigen Glasfläche 44 überlagern. Ein Schmutzfleck 66 im Bereich der vorderen Glasfläche 44 schattet daher nahezu alle Bildpunkte 54, 58, 64 ab. Anders ausgedrückt treffen Lichtstrahlen, die durch einen dem Schmutzfleck 66 entsprechenden Flächenpunkt auf der vorderen Glasfläche 44 treten, an verschiedenen Stellen 54, 58, 64 auf den Bildsensor 24. Trotz Schmutzfleck 66 ist die Erkennungssicherheit daher gegeben, es sei denn, dass die Grundhelligkeit des aufgenommenen Abbildes für eine zuverlässige Bildauswertung generell nicht ausreicht. Dies wird jedoch aufgrund der Helligkeitsüberwachung im Modul 32 rechtzeitig festgestellt. Die Erkennungssicherheit ist bei der neuen Vorrichtung 10 damit selbst im Fall von singulären Verschmutzungen der Glasfläche 44 nicht ortsabhängig.

Abschließend sei der Vollständigkeit halber erwähnt, dass die vordere Glasfläche 44 auch durch Kunststofflinsen oder andere geeignete Materialien realisiert sein kann, so dass der Begriff "Glas" hier nicht als einschränkend in Bezug auf ein bestimmtes Material verstanden werden soll.

## Patentansprüche

1. Vorrichtung zum Überwachen eines Raumbereichs, insbesondere zum Absichern eines Gefahrenbereichs (12) einer automatisiert arbeitenden Anlage (14), mit einer Bildaufnahmeeinheit (16) zum Aufnehmen eines Abbildes (28) des Raumbereichs und mit einer Auswerte- und Steuereinheit (18), die in Abhängigkeit von dem Abbild (28) eine Sicherheitsfunktion auslöst, wobei die Bildaufnahmeeinheit (16) eine Abbildungsoptik (22) mit einem Objektiv (70) und einen Bildsensor (24) mit einer Vielzahl von Bildpunkten (26) besitzt, wobei die Auswerte- und Steuereinheit (18) eine Bildhelligkeitsüberwachung (32) aufweist, die die Sicherheitsfunktion auslöst, wenn ein Bildhelligkeitswert des Abbildes (28) einen Bildhelligkeitsschwellenwert (38) unterschreitet, wobei die Auswerte- und Steuereinheit (18) eine Bildkontrastüberwachung (34) aufweist, die eine Sicherheitsfunktion auslöst, wenn ein Bildkontrastwert des Abbildes (28) einen Bildkontrastschwellenwert (40) unterschreitet, und wobei die Auswerte- und Steuereinheit (18) außerdem eine Positionsüberwachung (36) aufweist, die eine Sicherheitsfunktion auslöst, wenn sich die Position eines im Abbild detektierten Referenzobjektes (21) verändert, **dadurch gekennzeichnet, dass** die Abbildungsoptik (22) eine objektseitige vordere Glasfläche (44) und eine Eintrittspupille (72) besitzt, die auf oder im Bereich der objektseitigen vorderen Glasfläche (44) liegt, so dass eine singuläre Verschmutzung (66) der vorderen Glasfläche (44) die Vielzahl der Bildpunkte (26) weitgehend gleichmäßig abschattet, und **gekennzeichnet durch** zumindest ein im Raumbereich angeordnetes Referenzobjekt (21) mit einem definierten Bildkontrastwert, den die Auswerte- und Steuereinheit (18) überwacht, um kleineste Schmutzpartikel auf der vorderen Glasfläche (44) zu detektieren, und mit einer bekannten Position, die die Auswerte- und Steuereinheit (18) überwacht, um Wassertropfen und andere transparente Verschmutzungen auf der vorderen Glasfläche (44) zu detektieren.

2. Vorrichtung nach Anspruch 1, **dadurch gekennzeichnet, dass** die Eintrittspupille (72) in das Innere des Objektivs (70) versetzt in einem Abstand (d) von der objektseitigen vorderen Glasfläche (44) entfernt liegt, der kleiner als ein Öffnungsradius (r) der Eintrittspupille (72) ist.

3. Vorrichtung nach Anspruch 1 oder 2, **dadurch gekennzeichnet, dass** die Abbildungsoptik (22; 70) eine Aperturblende besitzt, die im Bereich der objektseitigen vorderen Glasfläche (44) liegt.

4. Vorrichtung nach Anspruch 3, **dadurch gekennzeichnet, dass** die Aperturblende mit der Eintrittspupille (72) zusammenfällt.

5. Vorrichtung nach einem der Ansprüche 1 bis 4, **dadurch gekennzeichnet, dass** die Abbildungsoptik (20; 70) eine Fassung (74) für die objektseitige vordere Glasfläche (44) besitzt, die plan mit der objektseitigen vorderen Glasfläche (44) abschließt.

6. Vorrichtung nach einem der Ansprüche 1 bis 5, **dadurch gekennzeichnet, dass** der Bildsensor (24) ein zweidimensionales Array von Bildpunkten (26) beinhaltet, welches dazu ausgebildet ist, das Abbild (28) vollständig aufzunehmen.

## Claims

1. Device for monitoring a spatial region, in particular for securing a hazardous area (12) of an installation (14) operating in an automated manner, comprising an image recording unit (16) for recording an image (28) of the spatial region and comprising an evaluation and control unit (18), which triggers a safety function in a manner dependent on the image (28), wherein the image recording unit (16) has an imaging optical unit (22) with a lens (70) and an image sensor (24) with a plurality of pixels (26), wherein the evaluation and control unit (18) has an image brightness monitoring unit (32) which triggers the safety function if an image brightness value of the image (28) drops below an image brightness threshold (38), wherein the evaluation and control unit (18) has an image contrast monitoring unit (34), which triggers a safety function if an image contrast value of the image (28) drops below an image contrast threshold (40), and wherein the evaluation and control unit (18) moreover has a position monitoring unit (36), which triggers a safety function if the position of a reference object (21) detected in the image changes, **characterized in that** the imaging optical unit (22) has an object-side front glass surface (44) and an entrance pupil (72), which lies on or in the region of the object-side front glass surface (44), such that a singular contamination (66) of the front glass surface (44) shadows the plurality of pixels (26) in a largely uniform manner, and **characterized by** at least one reference object (21), arranged in the spatial region, with a defined image contrast value, which is monitored by the evaluation and control unit (18) in order to detect very small dirt particles on the front glass surface (44), and with a known position, which is monitored by the evaluation and control unit (18) in order to detect water droplets and other transparent contaminants on the front glass surface (44).

2. Device according to Claim 1, **characterized in that** the entrance pupil (72) lies offset into the interior of the lens (70) at a distance (d) from the object-side front glass surface (44) which is smaller than an aperture radius (r) of the entrance pupil (72).

3. Device according to Claim 1 or 2, **characterized in that** the imaging optical unit (22; 70) has an aperture stop which lies in the region of the object-side front glass surface (44).

4. Device according to Claim 3, **characterized in that** the aperture stop coincides with the entrance pupil (72).

5. Device according to one of Claims 1 to 4, **characterized in that** the imaging optical unit (20; 70) has a frame (74) for the object-side front glass surface (44), which frame terminates in a planar fashion with the object-side front glass surface (44).

6. Device according to one of Claims 1 to 5, **characterized in that** the image sensor (24) comprises a two-dimensional array of pixels (26), which array is configured to completely record the image (28).

## Revendications

1. Dispositif de surveillance d'une région spatiale, notamment pour sécuriser une zone dangereuse (12) d'une installation fonctionnant de manière automatisée (14), comportant une unité d'acquisition d'image (16) destinée à acquérir une image (28) de la région spatiale et comportant une unité d'évaluation et de commande (18) qui déclenche une fonction de sécurité en fonction de l'image (28), dans lequel l'unité d'acquisition d'image (16) possède une optique de formation d'image (22) munie d'un objectif (70) et d'un capteur d'image (24) ayant une pluralité de pixels (26), dans lequel l'unité d'évaluation et de commande (18) comporte un dispositif de surveillance de luminosité d'image (32) qui déclenche la fonction de sécurité lorsque la valeur de luminosité d'image de l'image (28) s'abaisse en dessous d'un seuil de luminosité d'image (38), dans lequel l'unité d'évaluation et de commande (18) comporte un dispositif de surveillance de contraste d'image (34) qui déclenche une fonction de sécurité lorsqu'une valeur de contraste d'image (28) s'abaisse en dessous d'un seuil de contraste d'image (40), et dans lequel l'unité d'évaluation et de commande (18) comporte en outre un dispositif surveillance de position (36) qui déclenche une fonction de sécurité lorsque la position d'un objet de référence détecté (21) dans l'image se modifie, **caractérisé en ce que** l'optique de formation d'image (22) possède une surface de verre avant (44) côté objet et une pupille d'entrée (72), qui se situe sur ou dans la région de la surface de verre avant (44) côté objet de manière à ce qu'une salissure unique (66) de la surface de verre avant (44) occulte de façon sensiblement homogène la pluralité de pixels (26), et **caractérisé par** au moins un objet de référence (21) disposé dans la région spatiale, doté d'une valeur de contraste d'image définie que l'unité d'évaluation et de commande (18) surveille afin de détecter une très petite particule de salissure sur la surface de verre avant (44) et ayant une position connue que surveille l'unité d'évaluation et de commande (18) afin de détecter des gouttelettes d'eau et d'autres salissures transparentes sur la surface de verre avant (44).

2. Dispositif selon la revendication 1, **caractérisé en ce que** la pupille d'entrée (72) est située de manière éloignée de la surface de verre avant (44) côté objet à l'intérieur de l'objectif (70), en étant décalée d'une distance (d) qui est inférieure à un rayon d'ouverture (r) de la pupille d'entrée (72).

3. Dispositif selon la revendication 1 ou 2, **caractérisé en ce que** l'optique de formation d'image (22 ; 70) comporte un diaphragme d'ouverture qui se situe dans la région de la surface de verre avant (44) côté objet.

4. Dispositif selon la revendication 3, **caractérisé en ce que** le diaphragme d'ouverture coïncide avec la pupille d'entrée (72).

5. Dispositif selon l'une quelconque des revendications 1 à 4, **caractérisé en ce que** l'optique de formation d'image (20 ; 70) comporte une monture (74) pour la surface de verre avant (44) côté objet qui se termine dans le même plan que la surface de verre avant (44) côté objet.

6. Dispositif selon l'une quelconque des revendications 1 à 5, **caractérisé en ce que** le capteur d'image (24) contient un réseau bidimensionnel de pixels (26), qui est conçu pour acquérir la totalité de l'image (28).
